# EUROPÄISCHE PATENTSCHRIFT

(11) **EP 3 754 324 B1**
(45) Veröffentlichungstag und Bekanntmachung des Hinweises auf die Patenterteilung: **29.11.2023**
(21) Anmeldenummer: 19181318.7
(22) Anmeldetag: 19.06.2019
(51) Int. Cl.: G01N 15/14, G01N 21/94, G01N 21/88

(54) **VERFAHREN UND VORRICHTUNG ZUM KLASSIFIZIEREN EINER PARTIKELARTIGEN VERUNREINIGUNG AUF EINER OBERFLÄCHE**
METHOD AND DEVICE FOR CLASSIFYING PARTICULATE CONTAMINATION ON A SURFACE
PROCÉDÉ ET DISPOSITIF DE CLASSIFICATION D'UNE CONTAMINATION PARTICULAIRE SUR UNE SURFACE

(43) Veröffentlichungstag der Anmeldung: 23.12.2020
(73) Patentinhaber: Fraunhofer-Gesellschaft zur Förderung der angewandten Forschung e.V., 80686 München (DE)
(72) Erfinder: Schütz, Jan, 79110 Freiburg (DE); Blättermann, Alexander, 79110 Freiburg (DE); Brandenburg, Albrecht, 79110 Freiburg (DE)
(74) Vertreter: WSL Patentanwälte Partnerschaft mbB

(56) Entgegenhaltungen:
- DE-A1-102004 034 160
- JP-A- 2003 065 966
- JP-A- 2004 317 422
- JP-A- 2010 060 415
- US-A- 6 166 393
- US-A1- 2006 007 434
- US-A1- 2007 258 093
- US-A1- 2013 320 216
- US-A1- 2015 355 102
- US-B1- 6 327 374

## Beschreibung

Die vorliegende Erfindung betrifft ein Verfahren sowie eine Vorrichtung zum Klassifizieren einer partikelartigen Verunreinigung auf einer Oberfläche eines Prüflings.

Verunreinigungen mit Partikeln stellen in der industriellen Fertigung ein erhebliches Problem dar. Es sind daher Systeme zur Inspektion der technischen Sauberkeit von Prüflingen bekannt.

Zum Erfassen der Quantität von partikelartigen Verunreinigungen auf Bauteiloberflächen sind optische Systeme bekannt. Diese können jedoch die Partikel nicht nach einer Art der Partikel klassifizieren.

So wird in der US 2013/0320216 A1 beispielsweise in Verfahren zur Detektion von Verunreinigungen auf Oberflächen beschrieben, bei welchem die verunreinigte Oberfläche mit Terahertz-Strahlung beleuchtet und die an der Oberfläche gestreute Strahlung detektiert wird.

In der US 6,327,374 B1 wird weiter ein Verfahren und eine Vorrichtung zur Oberflächeninspektion offenbart, bei welchem ein sich bewegendes Objekt aus mindestens zwei verschiedenen Richtungen beleuchtet und die beleuchtete Oberfläche mit einer Kamera erfasst wird.

Die US 2007/0258093 A1 offenbart eine weitere Vorrichtung bzw. ein weiteres Verfahren zur Oberflächeninspektion, bei welcher eine Beleuchtungsquelle und ein Detektor in verschiedenen Winkeln relativ zu einer Probe positioniert werden, um die Oberfläche der Probe zu untersuchen.

Aus der US 2006/0007434 A1 ist ein System zur Oberflächeninspektion eines Objektes bekannt, wobei die Oberfläche mit einer gepulsten Strahlung beleuchtet und das Objekt bewegt wird und wobei mehrere Detektoren die Oberfläche erfassen.

Das Standardverfahren zur Klassifizierung von partikelartigen Verunreinigungen auf der Oberfläche eines Prüflings ist nach VDA 19 bzw. ISO 16232 etabliert. Verunreinigungen werden dabei von dem zu inspizierenden Bauteil abgespült und aus der Spülflüssigkeit gefiltert. Die Filtermembran wird anschließend unter ein Mikroskop gelegt und die gesammelten Partikel bildgebend analysiert und klassifiziert. Zur Ermittlung des Materials der Partikel wird ein Bild mit gekreuzten Polarisatoren hinter der Beleuchtung und vor der Kamera aufgenommen. Hierdurch werden metallische Reflexe unterdrückt, diese gelangen nicht in die Kamera. Die Partikel erscheinen als dunkle Bereiche auf dem hellen Filtermaterial. Zur Unterscheidung metallischer von nicht-metallischen Partikeln wird ein zweites Bild ohne gekreuzte Polarisatoren aufgenommen. Erscheinen nun helle glänzende Reflexe im Bereich des Bildes, in dem ein Partikel vorhanden ist, so wird das Partikel als metallisch klassifiziert. Partikel ohne solche hellen Glanz-Reflexe werden als nicht-metallisch klassifiziert. Das etablierte Standardverfahren zum Klassifizieren partikelartiger Verunreinigungen nach der Art ihres Materials erfordert somit nach wie vor einen komplizierten Extraktionsprozess und eine anschließende Analyse im Labor.

In der JP 2004 317422 A wird weiter ein Verfahren beschrieben, um Schmutzpartikel zu unterscheiden. Dazu werden von den Schmutzpartikeln, die auf einem transparenten Träger angeordnet sind, verschiedene Aufnahmen in Transmission und Reflexion gemacht, die miteinander verglichen werden. Metallpartikel zeigen sich dann beispielsweise in der Reflexionsaufnahme durch helle Bereiche, in der Transmissionsaufnahme hingegen als dunkle Bereiche.

Die JP 2003 065966A offenbart weiterhin ein Verfahren zur Unterscheidung von Schmutzpartikeln, wobei ein Unterschied zwischen Grauwerten der Partikel in einer Aufnahme ausgewertet wird, wobei die Aufnahme unter verschiedenen Beleuchtungswinkeln und Beleuchtungswellenlängen erfolgt.

Die US 6,166,393 A offenbart ein Verfahren zur automatischen Inspektion von bewegten Oberflächen anhand verschiedener Beleuchtungseinrichtungen.

Demgegenüber ist es Aufgabe der vorliegenden Erfindung, ein Verfahren und eine Vorrichtung bereitzustellen, welche ein Klassifizieren einer partikelartigen Verunreinigung unmittelbar auf der Oberfläche des Prüflings ermöglichen. So kann eine Analyse und Klassifizierung im Labor entfallen und stattdessen gelingt eine Klassifizierung direkt im Produktionsprozess.

Zumindest eine der zuvor genannten Aufgaben wird durch ein Verfahren, wie in Anspruch 1 definiert, zum Klassifizieren einer partikelartigen Verunreinigung auf einer Oberfläche eines Prüflings gelöst, wobei das Verfahren die Schritte aufweist: Beleuchten der Verunreinigung mit elektromagnetischer Strahlung mit einer bezogen auf die Verunreinigung ersten Beleuchtungsrichtung, Erfassen eines ersten Bildes der von der Strahlung aus der ersten Beleuchtungsrichtung beleuchteten Verunreinigung mit einer bezogen auf die Verunreinigung ersten Beobachtungsrichtung, Beleuchten der Verunreinigung mit elektromagnetischer Strahlung mit einer bezogen auf die Verunreinigung zweiten Beleuchtungsrichtung, Erfassen eines zweiten Bildes der von der Strahlung aus der zweiten Beleuchtungsrichtung beleuchteten Verunreinigung mit einer bezogen auf die Verunreinigung zweiten Beobachtungsrichtung, wobei a) entweder die erste Beleuchtungsrichtung und die zweite Beleuchtungsrichtung voneinander verschieden sind und einen von 0° verschiedenen Azimutwinkel einschließen sowie die erste Beobachtungsrichtung und die zweite Beobachtungsrichtung gleich sind oder b) die erste Beleuchtungsrichtung und die zweite Beleuchtungsrichtung gleich sind sowie die erste Beobachtungsrichtung und die zweite Beobachtungsrichtung voneinander verschieden sind und einen von 0° verschiedenen Azimutwinkel einschließen, wobei der Azimutwinkel derjenige Winkel ist, den die erste Beleuchtungsrichtung und die zweite Beleuchtungsrichtung oder die erste Beobachtungsrichtung und die zweite Beobachtungsrichtung in einer Projektion auf die Oberfläche einschließen, Berechnen eines Maßes für eine Ähnlichkeit zwischen dem ersten Bild und dem zweiten Bild, wobei eine Bildgröße oder ein betrachteter Bildausschnitt des ersten Bilds und des zweiten Bilds so gewählt wird, dass nur genau eine Verunreinigung in den ersten und zweiten Bildern bei der Berechnung des Maßes für die Ähnlichkeit berücksichtigt wird, und Einordnen der Verunreinigung in mindestens eine erste und eine zweite Klasse anhand des berechneten Maßes für die Ähnlichkeit zwischen dem ersten Bild und dem zweiten Bild, wobei die erste Klasse und die zweite Klasse jeweils eine Art eines Materials der Verunreinigung bezeichnen, wobei die Verunreinigung die Art des Materials einer der ersten und zweiten Klassen aufweist, wobei wenn die Ähnlichkeit zwischen dem ersten Bild und dem zweiten Bild über einem vorgegebenen Schwellenwert liegt, die Verunreinigung in die erste Klasse eingeteilt wird und wenn die Ähnlichkeit zwischen dem ersten Bild und dem zweiten Bild unter dem Schwellenwert liegt, die Verunreinigung in die zweite Klasse eingeteilt wird.

Der vorliegenden Erfindung liegt die Idee zugrunde, dass partikelartige Verunreinigungen mit unterschiedlichen Oberflächeneigenschaften einen unterschiedlichen Glanz aufweisen. Dabei wird unter dem Glanz die Fähigkeit einer Oberfläche verstanden, elektromagnetische Strahlung dem Reflexionsgesetz folgend zu reflektieren. Dem gegenüber steht die diffuse Streuung an Oberflächen mit einer höheren Rauheit. Die diffuse Streuung wird als Mattheit der Oberfläche wahrgenommen.

Da die diffuse Streuung an einer rauen Oberfläche ein statistischer Prozess ist, unterscheiden sich zwei unter verschiedenen Beleuchtungsbedingungen bei identischer Beobachtungsrichtung erfasste oder zwei bei identischen Beleuchtungsbedingungen aus zwei unterschiedlichen Beobachtungsrichtungen erfasste Bilder nicht oder nur in einem geringem Maße. Bei partikelartigen Verunreinigungen mit einem hohen Glanz, d.h. einem hohen Anteil an Reflexion, hingegen ändert sich die Reflexion in Abhängigkeit von der Beleuchtungsrichtung und der Beobachtungsrichtung.

Entscheidend für die Realisierung des Verfahrens und der Vorrichtung ist es, dass für die beiden zu vergleichenden Bilder die partikelartige Verunreinigung entweder aus unterschiedlichen Beleuchtungsrichtungen beleuchtet wurde oder aus unterschiedlichen Beobachtungsrichtungen erfasst wurde.

Während die zwei Beleuchtungsrichtungen oder die zwei Beobachtungsrichtungen in Bezug auf die Verunreinigung dadurch realisiert werden können, dass zwei Beleuchtungsquellen die Verunreinigung mit zwei voneinander verschiedenen Beleuchtungsrichtungen beleuchten oder zwei Kameras die Verunreinigung mit unterschiedlichen Erfassungsrichtungen erfassen, ist es auch möglich, die Probe zwischen dem Erfassen des ersten Bildes und dem Erfassen des zweiten Bildes um eine Schwenkachse zu verschwenken, sodass die Beleuchtung oder die Erfassung der Verunreinigung bezogen auf diese mit zwei voneinander verschiedenen Richtungen erfolgt.

In einer Ausführungsform gemäß Alternative a) erfolgen das Erfassen des ersten Bildes ausschließlich bei Beleuchtung aus der ersten Beleuchtungsrichtung und das Erfassen des zweiten Bildes ausschließlich bei Beleuchtung aus der zweiten Beleuchtungsrichtung.

In einer Ausführungsform erfolgt das Erfassen des ersten und des zweiten Bildes zeitlich nacheinander, sodass Zeit verbleibt, die elektromagnetische Strahlung unter der ersten Beleuchtungsrichtung auszuschalten und die elektromagnetische Strahlung unter der zweiten Beleuchtungsrichtung einzuschalten.

Allerdings sind ebenso Ausführungsformen denkbar, bei welchen die Verunreinigung gleichzeitig aus den beiden Beleuchtungsrichtungen beleuchtet wird. Bei einer solchen Ausführungsform ist es notwendig, dass die elektromagnetische Strahlung der beiden Beleuchtungsrichtungen sich unterscheidet. Eine mögliche Unterscheidung ist die Verwendung verschiedener Wellenlängen für die Strahlung unter der ersten Beleuchtungsrichtung und die Strahlung unter der zweiten Beleuchtungsrichtung. Es versteht sich, dass diese beiden Wellenlängen dann in der Kamera von verschiedenen Pixeln erfasst werden müssen und getrennt zu dem ersten Bild und dem zweiten Bild weiterverarbeitet werden müssen.

Bei einer Ausführungsform gemäß der Variante b), bei welcher die beiden Beleuchtungsrichtungen identisch sind, jedoch die beiden Bilder aus voneinander verschiedenen Beobachtungsrichtungen aufgenommen werden, ist es offensichtlich, dass beide Bilder auch gleichzeitig erfasst werden können. In einer weiteren Ausführungsform gemäß Variante b) erfolgen das Erfassen des ersten Bildes ausschließlich in der ersten Beobachtungsrichtung und das Erfassen des zweiten Bildes ausschließlich in der zweiten Beobachtungsrichtung.

Für die Realisierung der vorliegenden Erfindung ist es unerheblich, in welchem Wellenlängenbereich die elektromagnetische Strahlung mit der ersten Beleuchtungsrichtung und mit der zweiten Beleuchtungsrichtung liegt. Jedoch ist in einer Ausführungsform der Erfindung die elektromagnetische Strahlung sichtbares Licht oder Strahlung im infraroten Frequenzbereich.

Es versteht sich, dass die ersten und zweiten Bilder in einer Ausführungsform mit einer Kamera erfasst werden, insbesondere einer Digitalkamera, beispielsweise einer CCD-Kamera oder einer CMOS-Kamera.

Zum Erzeugen der elektromagnetischen Strahlung eignen sich eine Vielzahl von Strahlungsquellen, insbesondere aber Leuchtdioden. Wenn von der Beleuchtungsrichtung im Sinne der vorliegenden Erfindung die Rede ist, so ist diese in einer Ausführungsform gegeben durch eine Verbindungslinie zwischen der Quelle für die elektromagnetische Strahlung und der zu erfassenden partikelartigen Verunreinigung auf der Oberfläche. Hat die jeweilige Quelle für die elektromagnetische Strahlung eine endliche Ausdehnung, so fällt die Beleuchtungsrichtung in einer Ausführungsform mit einer Symmetrieachse der ausgedehnten Strahlungsquelle zusammen.

Ein Maß für die Ähnlichkeit zwischen dem ersten Bild und dem zweiten Bild lässt sich mit den aus der Bildverarbeitung bekannten Methoden und Algorithmen berechnen. In einer Ausführungsform der Erfindung wird als Maß für die Ähnlichkeit zwischen dem ersten Bild und dem zweiten Bild die quadratische Abweichung zwischen den beiden Bildern herangezogen.

Da ein Klassifizieren jeder einzelnen Verunreinigung erfolgen soll, so muss für den Vergleich zwischen dem ersten Bild und dem zweiten Bild die Bildgröße oder der betrachtet Bildausschnitt so gewählt werden, dass nur genau eine Verunreinigung in den ersten und zweiten Bildern bei der Berechnung des Maßes für die Ähnlichkeit berücksichtigt wird. S lässt sich durch das Berechnen des Maßes für die Ähnlichkeit zwischen dem ersten Bild und dem zweiten Bild eine einzelne partikelartige Verunreinigung klassifizieren.

Die erste Klasse und die zweite Klasse bezeichnen jeweils eine Art eines Materials der Verunreinigung, wobei die Verunreinigung die Art des Materials einer der ersten und zweiten Klassen aufweist, wobei wenn die Ähnlichkeit zwischen dem ersten Bild und dem zweiten Bild über einem vorgegebenen Schwellenwert liegt, die Verunreinigung in die erste Klasse eingeteilt wird und wenn die Ähnlichkeit zwischen dem ersten Bild und dem zweiten Bild unter dem Schwellenwert liegt, die Verunreinigung in die zweite Klasse eingeteilt wird. Grundsätzlich ist es möglich, die partikelartige Verunreinigung in mehr als zwei Klassen einzuordnen. Es versteht sich, dass in diesem Fall eine Mehrzahl von Schwellenwerten festgelegt werden muss, die jeweils ein Entscheidungskriterium für das Einordnen in die verschiedenen Klassen bilden.

In einer Ausführungsform der Erfindung bezeichnet die erste Klasse ein Material mit einer ersten Oberflächenrauheit und die zweite Klasse bezeichnet ein Material mit einer zweiten Oberflächenrauheit, wobei die erste Oberflächenrauheit größer ist als die zweite Oberflächenrauheit. Geht man davon aus, dass die zunehmende Oberflächenrauheit der Anteile der diffusen Streuung von der Oberfläche der Verunreinigung zunimmt, so folgt, dass, wenn das erste Bild und das zweite Bild eine hohe Ähnlichkeit aufweisen, die partikelartige Verunreinigung mit hoher Wahrscheinlichkeit das Material mit der ersten Oberflächenrauheit ist. Demgegenüber ist es wahrscheinlich, dass dann, wenn das erste und das zweite Bild eine geringe Ähnlichkeit aufweisen, das Material die zweite, geringere Oberflächenrauheit hat.

Ein Beispiel für zwei Klassen von Materialien von Verunreinigungen, die sich mithilfe des erfindungsgemäßen Verfahrens einordnen lassen, sind Kunststoff und Metall. Metall führt aufgrund seines höheren Glanzes zu Bildern mit einer geringeren Ähnlichkeit, während Kunststoff aufgrund seiner Oberflächenrauheit und der daraus folgenden diffusen Streuung an der Oberfläche zu Bildern mit höherer Ähnlichkeit führt.

Im Folgenden werden die Winkel zwischen den Beleuchtungsrichtungen oder die Winkel zwischen den Beobachtungsrichtungen betrachtet. Dabei wird im vorliegenden Sinne als Azimutwinkel der Winkel zwischen zwei Beleuchtungsrichtungen oder zwei Beobachtungsrichtungen verstanden, dessen Winkelscheitel von einer Normalen auf der Oberfläche gebildet wird. Dieser Azimutwinkel ist gemessen in einer Ebene senkrecht zu dieser Normalen auf der Oberfläche. Mit anderen Worten ausgedrückt wird als Azimutwinkel im Sinne der vorliegenden Anmeldung derjenige Winkel verstanden, den die Beleuchtungsrichtungen oder die Beobachtungsrichtungen in einer Projektion auf die Oberfläche einschließen. Im Gegensatz dazu wird als Elevationswinkel im Sinne der vorliegenden Anmeldung der Winkel verstanden, den eine Beleuchtungsrichtung oder eine Beobachtungsrichtung in einer Ebene, welche die Normale auf der Oberfläche enthält und die senkrecht zur Oberfläche ist, mit der Oberfläche einschließt.

Während es grundsätzlich möglich ist, die grundlegende Idee des erfindungsgemäßen Verfahrens zu realisieren, solange die erste Beleuchtungsrichtung und die zweite Beleuchtungsrichtung oder die erste Beobachtungsrichtung und die zweite Beobachtungsrichtung irgendeinen von 0° verschiedenen Winkel einschließen, hat in einer Ausführungsform der Azimutwinkel zwischen der ersten Beleuchtungsrichtung und der zweiten Beleuchtungsrichtung einen Wert in einem Bereich von 80° bis 110°, vorzugsweise von 90°. In einer Ausführungsform der Erfindung hat der Azimutwinkel zwischen der ersten Beobachtungsrichtung und der zweiten Beobachtungsrichtung einen Wert in einem Bereich von 80° bis 110°, vorzugsweise von 90°. Für einen Winkel um 90° herum führt eine partikelartige Verunreinigung mit maximalem Glanz zu ersten und zweiten Bildern mit maximaler Unähnlichkeit.

Zum Erhöhen des "Kontrastes" zwischen zwei Bildern mit geringer Ähnlichkeit und zwei Bildern mit hoher Ähnlichkeit kann es zweckmäßig sein, die partikelartige Verunreinigung zum Erfassen des ersten Bildes und des zweiten Bildes jeweils gleichzeitig aus zwei gegenüberliegenden Beleuchtungsrichtungen zu beleuchten. Daher weist das Verfahren in einer Ausführungsform weiterhin die Schritte auf: Beleuchten der Verunreinigung mit elektromagnetischer Strahlung mit einer dritten Beleuchtungsrichtung, Beleuchten der Verunreinigung mit elektromagnetischer Strahlung mit einer vierten Beleuchtungsrichtung, wobei ein Azimutwinkel zwischen der ersten Beleuchtungsrichtung und der dritten Beleuchtungsrichtung einen Wert in einem Bereich von 170° bis 190°, vorzugsweise von 180° aufweist, und wobei ein Azimutwinkel zwischen der zweiten Beleuchtungsrichtung und der vierten Beleuchtungsrichtung einen Wert in einem Bereich von 170° bis 190°, vorzugsweise von 180° aufweist, wobei das Erfassen des ersten Bildes bei einer gleichzeitigen Beleuchtung der Verunreinigung aus der ersten Beleuchtungsrichtung und der dritten Beleuchtungsrichtung erfolgt und wobei das Erfassen des zweiten Bildes bei einer gleichzeitigen Beleuchtung der Verunreinigung aus der zweiten Beleuchtungsrichtung und aus der vierten Beleuchtungsrichtung erfolgt.

Während zuvor Ausführungsformen beispielhaft diskutiert wurden, bei welchen für das Klassifizieren eine Ähnlichkeit zwischen zwei unter unterschiedlichen Aufnahmebedingungen erfassten Bildern herangezogen wird, wird in einer Ausführungsform das Klassifizieren anhand der Ähnlichkeit zwischen drei oder mehr Bildern ausgeführt, die alle unter verschiedenen Aufnahmebedingungen erfasst wurden. Daher weist das erfindungsgemäße Verfahren in einer Ausführungsform die Schritte auf: Beleuchten der Verunreinigung mit elektromagnetischer Strahlung mit einer fünften Beleuchtungsrichtung, Erfassen eines dritten Bildes der von der Strahlung aus der fünften Beleuchtungsrichtung beleuchteten Verunreinigung mit einer dritten Beobachtungsrichtung, wobei entweder die erste Beleuchtungsrichtung, die zweite Beleuchtungsrichtung und die fünfte Beleuchtungsrichtung voneinander verschieden sind sowie die erste Beobachtungsrichtung, die zweite Beobachtungsrichtung und die dritte Beobachtungsrichtung gleich sind oder die erste Beleuchtungsrichtung, die zweite Beleuchtungsrichtung und die fünfte Beleuchtungsrichtung gleich sind sowie die erste Beobachtungsrichtung, die zweite Beobachtungsrichtung und die dritte Beobachtungsrichtung jeweils voneinander verschieden sind, und Berechnen eines Maßes für eine Ähnlichkeit zwischen dem ersten Bild, dem zweiten Bild und dem dritten Bild.

In einer Ausführungsform, bei welcher die erste und die zweite Beobachtungsrichtung gleich sind, sind die erste und zweite Beobachtungsrichtung gleich der Normalen auf der Oberfläche. Mit anderen Worten ausgedrückt, schaut in einer solchen Variante die Kamera von oben senkrecht auf die Oberfläche, deren Verunreinigungen zu klassifizieren sind.

In einer Ausführungsform der Erfindung, bei welcher die erste und die zweite Beobachtungsrichtung gleich sind, unterscheiden sich die erste und die zweite Beleuchtungsrichtung nur durch einen zwischen diesen gemessenen Azimutwinkel. Mit anderen Worten ausgedrückt, liegen dann die Quellen für die elektromagnetische Strahlung in gleichem Abstand von der Oberfläche; die zwischen den Beleuchtungsrichtungen und der Oberfläche eingeschlossenen Elongationswinkel sind alle gleich.

In einer Ausführungsform der vorliegenden Erfindung ist der Azimutwinkel zwischen der ersten Beleuchtungsrichtung und der zweiten Beleuchtungsrichtung ungleich 180°. Aus statistischen Gründen liefert ein Azimutwinkel zwischen erster Beleuchtungsrichtung und zweiter Beleuchtungsrichtung von 180° einen vergleichsweise geringen "Kontrast" zwischen einem Bilderpaar mit geringer Ähnlichkeit und einem Bilderpaar mit hoher Ähnlichkeit.

In einer weiteren Ausführungsform der Erfindung, bei welcher das Merkmal b) realisiert ist, d.h. die erste und die zweite Beleuchtungsrichtung gleich sind, unterscheiden sich die erste und die zweite Beobachtungsrichtung nur durch den von diesen eingeschlossenen Azimutwinkel. Mit anderen Worten ausgedrückt, haben die beiden zur Bilderfassung verwendeten Kameras dann den gleichen Abstand von der Oberfläche; die Elevationswinkel der beiden Beobachtungsrichtungen sind gleich.

Darüber hinaus wird zumindest eine der oben genannten Aufgaben auch durch eine Vorrichtung, wie in Anspruch 9 definiert, zum Klassifizieren einer partikelartigen Verunreinigung auf einer Oberfläche eines Prüflings gelöst, wobei die Vorrichtung aufweist: eine Beleuchtung mit mindestens einer ersten Beleuchtungseinrichtung, wobei die Beleuchtung derart eingerichtet und angeordnet ist, dass in einem Betrieb der Vorrichtung mit der Beleuchtung die Verunreinigung mit elektromagnetischer Strahlung mit einer ersten Beleuchtungsrichtung und einer zweiten Beleuchtungsrichtung beleuchtbar ist, eine Erfassungseinrichtung mit mindestens einer ersten Kamera, wobei die Erfassungseinrichtung derart eingerichtet ist, dass mit der Erfassungseinrichtung in dem Betrieb der Vorrichtung ein erstes Bild der von der Strahlung aus der ersten Beleuchtungsrichtung beleuchteten Verunreinigung mit einer ersten Beobachtungsrichtung erfassbar ist und ein zweites Bild der von der Strahlung aus der zweiten Beleuchtungsrichtung beleuchteten Verunreinigung mit einer zweiten Beobachtungsrichtung erfassbar ist, eine Steuereinrichtung, wobei die Steuereinrichtung derart eingerichtet ist, dass a) entweder die erste Beleuchtungsrichtung und die zweite Beleuchtungsrichtung voneinander verschieden sind und einen von 0° verschiedenen Azimutwinkel einschließen sowie die erste Beobachtungsrichtung und die zweite Beobachtungsrichtung gleich sind oder b) die erste Beleuchtungsrichtung und die zweite Beleuchtungsrichtung gleich sind sowie die erste Beobachtungsrichtung und die zweite Beobachtungsrichtung voneinander verschieden sind und einen von 0° verschiedenen Azimutwinkel einschließen, wobei der Azimutwinkel derjenige Winkel ist, den die erste Beleuchtungsrichtung und die zweite Beleuchtungsrichtung oder die erste Beobachtungsrichtung und die zweite Beobachtungsrichtung in einer Projektion auf die Oberfläche einschließen, und eine Auswerteeinrichtung, wobei die Auswerteeinrichtung derart wirksam mit der Erfassungseinrichtung verbunden ist, dass die Auswerteeinrichtung in dem Betrieb der Vorrichtung das erste und das zweite Bild von der Erfassungserrichtung empfängt, und wobei die Auswerteeinrichtung derart eingerichtet ist, dass die Auswerteeinrichtung ein Maß für eine Ähnlichkeit zwischen dem ersten Bild und dem zweiten Bild berechnet, wobei eine Bildgröße oder ein betrachteter Bildausschnitt des ersten Bilds und des zweiten Bilds so gewählt wird, dass nur genau eine Verunreinigung in den ersten und zweiten Bildern bei der Berechnung des Maßes für die Ähnlichkeit berücksichtigt wird, und wobei die Auswerteeinrichtung derart eingerichtet ist, dass die Auswerteeinrichtung die Verunreinigung anhand des berechneten Maßes für die Ähnlichkeit in eine aus mindestens einer ersten und einer zweiten Klasse einordnet, wobei die erste Klasse und die zweite Klasse jeweils eine Art eines Materials der Verunreinigung bezeichnen und wobei wenn die Ähnlichkeit zwischen dem ersten Bild und dem zweiten Bild über einem vorgegebenen Schwellenwert liegt, die Verunreinigung in die erste Klasse eingeteilt wird und wenn die Ähnlichkeit zwischen dem ersten Bild und dem zweiten Bild unter dem Schwellenwert liegt, die Verunreinigung in die zweite Klasse eingeteilt wird.

Soweit im folgenden Aspekte der Erfindung im Hinblick auf die Vorrichtung zum Klassifizieren einer partikelartigen Verunreinigung auf einer Oberfläche eines Prüflings beschrieben werden, so gelten diese auch für das entsprechende zuvor beschriebene Verfahren und umgekehrt. Soweit das Verfahren mit einer Vorrichtung gemäß dieser Erfindung ausgeführt wird, so weist diese Vorrichtung die entsprechenden Einrichtungen hierfür auf. Insbesondere aber sind Ausführungsformen der Vorrichtung zum Ausführen der zuvor beschriebenen Ausführungsformen des Verfahrens geeignet.

In einer Ausführungsform der Erfindung ist die Steuereinrichtung wirksam mit der Beleuchtung verbunden, wobei die Beleuchtung eine zweite Beleuchtungseinrichtung aufweist, wobei die Steuereinrichtung derart eingerichtet ist, dass in dem Betrieb der Vorrichtung die Verunreinigung von der ersten Beleuchtungseinrichtung mit elektromagnetischer Strahlung mit der ersten Beleuchtungsrichtung beleuchtbar ist und von der zweiten Beleuchtungseinrichtung mit elektromagnetischer Strahlung mit der zweiten Beleuchtungsrichtung beleuchtbar ist.

In einer Ausführungsform der Erfindung ist die Steuereinrichtung ferner derart eingerichtet, dass die Beleuchtung der Verunreinigung mit der ersten Beleuchtungseinrichtung und mit der zweiten Beleuchtungseinrichtung zeitlich nacheinander erfolgt.

In einer Ausführungsform werden zumindest die Steuereinrichtung oder die Auswerteeinrichtung von einem Prozessor oder Rechner gebildet.

In einer Ausführungsform der Erfindung sind die erste und die zweite Beleuchtungseinrichtung Segmente einer ringförmigen Beleuchtung mit einer Mehrzahl von Segmenten. Eine solche einen Ring approximierende Beleuchtung ermöglicht es, mehr als zwei Bilder bei Beleuchtung aus voneinander verschiedenen Beleuchtungsrichtungen nacheinander aufzunehmen und für das Berechnen der Ähnlichkeit und damit das Klassifizieren heranzuziehen.

Darüber hinaus ist eine derartige ringförmige Beleuchtung auch geeignet, in einem Verfahren verwendet zu werden, bei welchem die Auswerteeinrichtung in dem Betrieb der Vorrichtung zumindest aus dem ersten oder dem zweiten Bild ein Maß für eine Anzahl von Verunreinigungen auf der Oberfläche berechnet. Bei derartigen Verfahren zur quantitativen Bestimmung der Verunreinigungen auf der Oberfläche wird die Oberfläche gleichzeitig aus einer Vielzahl von Raumrichtungen beleuchtet. Mit anderen Worten ausgedrückt, sind alle Segmente der ringförmigen Beleuchtung gleichzeitig eingeschaltet.

In einer weiteren Ausführungsform der vorliegenden Erfindung weist die Vorrichtung eine Verschwenkeinrichtung auf, wobei die Verschwenkeinrichtung derart ausgestaltet ist, dass die Verschwenkeinrichtung in dem Betrieb der Vorrichtung zwischen dem Erfassen des ersten Bildes und dem Erfassen des zweiten Bildes eine relative Verschwenkung zwischen der Oberfläche mit der Verunreinigung einerseits und der Beleuchtung und der Erfassungseinrichtung andererseits ausführt.

In einer weiteren Ausführungsform der Erfindung ist die Beleuchtung derart angeordnet, dass die erste und zweite Beleuchtungsrichtung einen Streiflichteinfall auf der Oberfläche bewirken. Mit anderen Worten ausgedrückt, ist in einer solchen Ausführungsform der Elevationswinkel zwischen der jeweiligen Beleuchtungsrichtung und der Oberfläche ein spitzer Winkel, vorzugsweise ein Winkel von weniger als 10°.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine schematische Darstellung einer Vorrichtung zum Klassifizieren einer partikelartigen Verunreinigung gemäß einer ersten Ausführungsform der vorliegenden Erfindung.
- Figur 2: ist eine schematische Darstellung einer Vorrichtung zum Klassifizieren einer partikelartigen Verunreinigung gemäß einer zweiten Ausführungsform der vorliegenden Erfindung.
- Figur 3: ist eine tabellarische Gegenüberstellung von Bildern, welche mit der Vorrichtung aus Figur 2 erfasst wurden.

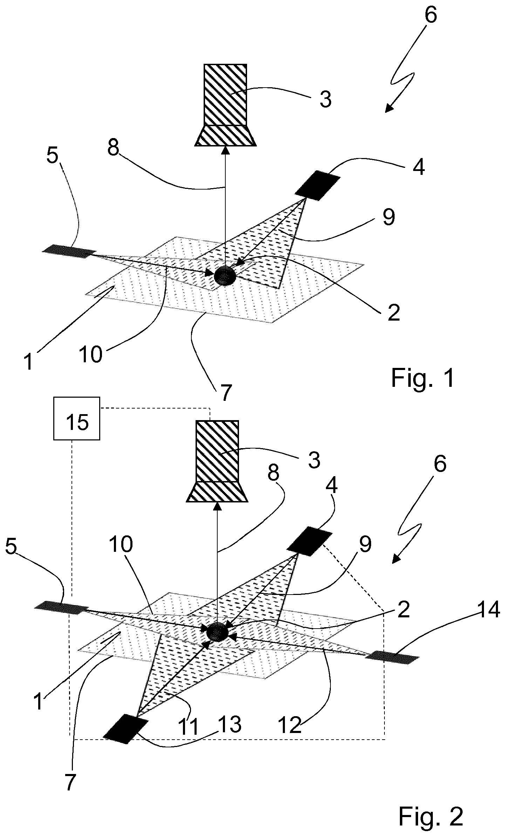

Figur 1 ist eine schematische Darstellung einer Vorrichtung 6 zum Klassifizieren einer partikelartigen Verunreinigung 2 auf der Oberfläche 1 eines Prüflings 7. In dem hier exemplarisch diskutierten Anwendungsfall geht es darum, dass auf der Oberfläche 1 in einer industriellen Produktionsumgebung partikelartige Verunreinigungen 2 vorhanden sind, welche in zwei Klassen einer Materialeigenschaft fallen. Zum einen gibt es metallische Verunreinigungen und zum anderen solche aus einem Kunststoff. Diese beiden Materialklassen unterscheiden sich insbesondere durch den unterschiedlichen Glanz der Oberflächen der Verunreinigungen 2.

Metallische partikelartige Verunreinigungen 2 haben einen hohen Glanz, da ein großer Anteil des auf die Verunreinigung 2 treffenden Lichts nach dem Reflexionsgesetz an der Oberfläche 1 reflektiert wird. Dies führt zu hellen Reflexen, welche aber aufgrund der Unregelmäßigkeit der Oberfläche der partikelartigen Verunreinigung in ihrer Richtung stark unterschiedlich sind. Demgegenüber haben Kunststoffe eine Oberfläche mit einer höheren Rauheit, was zu einem größeren Anteil an diffus gestreutem Licht und einem geringeren Glanz führt. Diesen unterschiedlichen Glanz der beiden Materialklassen nutzt das hier offenbarte Verfahren, um die auf der Oberfläche 1 vorhandene Verunreinigung 2 in die beiden Klassen einzuordnen.

Zu diesem Zweck weist die Vorrichtung 6 zwei Lichtquellen 4, 5 auf. Diese bilden die erste und die zweite Beleuchtungseinrichtung im Sinne der vorliegenden Anmeldung. Beide Lichtquellen 4, 5 zusammen stellen die Beleuchtung der Vorrichtung 6 dar. Zudem umfasst die Vorrichtung eine einzige Kamera 3, welche als erste Kamera im Sinne der vorliegenden Anmeldung bezeichnet wird. Die Kamera 3 ist Bestandteil einer Erfassungseinrichtung zum Erfassen von Bildern der Oberfläche 1 des Prüflings 7 mit der darauf angeordneten Verunreinigung 2.

Zum Klassifizieren der Verunreinigung 2 in die beiden zuvor beschriebenen Materialklassen werden nun zeitlich nacheinander ein erstes Bild und ein zweites Bild der Oberfläche 1 mit der Verunreinigung 2 von der Kamera 3 aufgenommen. Dabei wird während dem Erfassen des ersten Bildes die Oberfläche 1 mit der Verunreinigung 2 nur von der ersten Lichtquelle 4 beleuchtet und während der Aufnahme des zweiten Bildes nur von der zweiten Lichtquelle 5.

Die Beobachtungsrichtung 8 für beide Bilder ist gleich und steht senkrecht auf der Oberfläche 1 des Prüflings 7. Die Beobachtungsrichtung 8 fällt mit der Normalen der Oberfläche 1 zusammen.

Die beiden Lichtquellen 4, 5 sind so angeordnet, dass sie die Verunreinigung 2 aus zwei voneinander verschiedenen Beleuchtungsrichtungen 9, 10 beleuchten. Dabei ist die Beleuchtungsrichtung 9 der ersten Lichtquelle 4 die erste Beleuchtungsrichtung und die Beleuchtungsrichtung 10 der zweiten Lichtquelle 5 ist die zweite Beleuchtungsrichtung im Sinne der vorliegenden Anmeldung.

Entscheidend für die Funktion des Verfahrens zum Klassifizieren ist es nun, dass die erste Beleuchtungsrichtung 9 und die zweite Beleuchtungsrichtung 10 voneinander verschieden sind. Stark streuende Oberflächen führen unabhängig vom Einfallswinkel des Lichts auf die Oberfläche immer zu einer diffusen Streuung etwa homogen in alle Raumrichtungen. Daher wird sich ein erstes Bild, welches aufgenommen wird, wenn die Oberfläche 1 aus der ersten Beleuchtungsrichtung 9 beleuchtet wird, in seiner Helligkeitsverteilung nicht wesentlich von einem zweiten Bild unterscheiden, welches unter der zweiten Beleuchtungsrichtung 10 beleuchtet wird. Bei einer stark reflektierenden Oberfläche, d.h. einer mit hohem Glanz, hängt die Richtung, in welche das Licht reflektiert wird, sehr stark von der Beleuchtungsrichtung ab, sodass sich zwei Bilder, die mit voneinander verschiedenen Beleuchtungsrichtungen 9, 10 erfasst wurden, stark voneinander unterscheiden, d.h. eine geringe Ähnlichkeit aufweisen.

Für die Funktion der Erfindung ist es grundsätzlich möglich, die erste Beleuchtungsrichtung 9 oder die zweite Beleuchtungsrichtung 10 unter beliebigen, voneinander verschiedenen Winkeln zueinander anzuordnen. In der in Figur 1 gezeigten Vorrichtung ist der Azimutwinkel, d.h. der Winkel, welchen die erste Beleuchtungsrichtung 9 und die zweite Beleuchtungsrichtung 10 in einer Projektion auf die Oberfläche 1 einschließen, ungleich 90° und auch die Elevationswinkel, d.h. der Winkel zwischen der jeweiligen Beleuchtungsrichtung 9, 10 und der Oberfläche 1 sind voneinander verschieden.

Für die Ansteuerung der Lichtquellen 4, 5, 13, 14 und der Kamera weisen die Vorrichtungen 6 aus den Figuren 1 und 2 eine entsprechende Steuereinrichtung 15 (nur in Figur 2 explizit dargestellt), auf. Zudem weist die Vorrichtung 6 für die Auswertung der mit der Kamera 3 erfassten Bilder eine Auswerteeinrichtung 16 auf. Sowohl die Steuereinrichtung 15 als auch die Auswerteeinrichtung 16 werden von einem Rechner gebildet.

Die Anordnung der Vorrichtung 6 aus Figur 2 geht in dem Sinne über die Vorrichtung 6 aus Figur 1 hinaus, dass hier ein optimierter "Kontrast" zwischen zwei Bildern mit geringer Ähnlichkeit auf der einen Seite und zwei Bildern mit hoher Ähnlichkeit auf der anderen Seite bewirkt wird. Zu diesem Zweck verfügt die Vorrichtung insgesamt über vier Lichtquellen. Zusätzlich zu der ersten Lichtquelle 4 und der zweiten Lichtquelle 5 sind eine dritte Lichtquelle 13 und eine vierte Lichtquelle 14 vorhanden. Dabei sind die erste 4 und die dritte Lichtquelle 13 einander gegenüberliegend angeordnet, sodass ihre Beleuchtungsrichtungen 9, 11 einen Azimutwinkel von 180° einschließen. Ebenso ist der zweiten Lichtquelle 5 eine vierte Lichtquelle 14 gegenüberliegend angeordnet, sodass die zweite Beleuchtungsrichtung 10 und die vierte Beleuchtungsrichtung 12 einen Azimutwinkel von 180° einschließen. Die erste Beleuchtungsrichtung 9 und die zweite Beleuchtungsrichtung 10 wiederum schließen einen Azimutwinkel von 90° ein. Zudem sind alle Elevationen der Beleuchtungsrichtungen 9, 10, 11, 12 gleich und so gewählt, dass ein Streiflichteinfall auf die Oberfläche erzeugt wird.

Während dem Erfassen des ersten und des zweiten Bildes wird die Oberfläche 1 mit der Verunreinigung 2 jeweils von einem Paar von gegenüberliegenden Lichtquellen 4, 13 bzw. 5, 14, beleuchtet.

Der Streiflichteinfall der Beleuchtungsrichtungen 9, 10, 11, 12 kann dazu verwendet werden, zusätzlich ein weiteres Bild aufzunehmen, bei welchem die Oberfläche 1 mit der Verunreinigung 2 von allen vier Lichtquellen 4, 5, 13, 14, d.h. aus allen vier Beleuchtungsrichtungen 9, 10, 11, 12, gleichzeitig beleuchtet wird. Mit einem solchen Bild lässt sich die Anzahl der Verunreinigungen 2 auf der Oberfläche 1 quantitativ bestimmen.

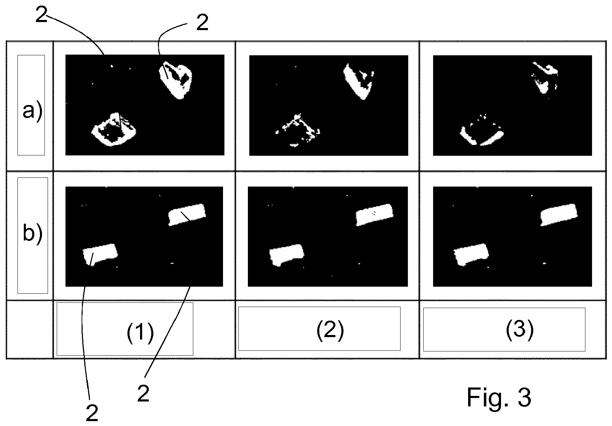

In der Tabelle aus Figur 3 sind nun verschiedene Bilder von jeweils zwei Verunreinigungen dargestellt, welche mithilfe der Vorrichtung aus Figur 2 erfasst wurden. In der oberen, mit a) bezeichneten Reihe der Tabelle sind drei Bilder von zwei metallischen Verunreinigungen 2 auf der Oberfläche 1 dargestellt. In der zweiten, mit b) bezeichneten Zeile der Tabelle sind Bilder von zwei nicht-metallischen Verunreinigungen 2 auf der Oberfläche 1 dargestellt.

Die Bilder in der ersten Spalte (1) wurden erfasst, während alle Lichtquellen 4, 5, 13, 14 gleichzeitig eingeschaltet waren. Diese Bilder dienen nur als Vergleich.

Die in der zweiten Spalte (2) gezeigten Bilder wurden aufgenommen, während die Oberfläche 1 mit den Verunreinigungen 2 gleichzeitig von der zweiten Lichtquelle 5 und der vierten Lichtquelle 14 beleuchtet wurden, während die erste Lichtquelle 4 und die dritte Lichtquelle 13 ausgeschaltet waren. Die Bilder der dritten Spalte (3) der Tabelle wurden aufgenommen, während die Oberfläche 1 mit den Verunreinigungen 2 gleichzeitig von der ersten Lichtquelle 4 und der dritten Lichtquelle 13 beleuchtet wurden, während die zweite Lichtquelle 5 und die vierte Lichtquelle 14 ausgeschaltet waren.

Betrachtet man nun die Bilder der nicht-metallischen Verunreinigungen in der zweiten Zeile b), so fällt auf, dass sich die beiden unter unterschiedlichen Beleuchtungsbedingungen aufgenommenen Bilder im Wesentlichen nicht voneinander unterscheiden. D.h. das erste Bild in Zeile b), Spalte (2) weist eine hohe Ähnlichkeit zu dem zweiten Bild in Zeile b), Spalte (3) auf.

Demgegenüber lassen das erste Bild der metallischen Verunreinigungen in Zeile a), Spalte (2) und das zweite Bild der metallischen Verunreinigungen in Zeile a) und Spalte (3) deutliche Unterschiede erkennen. Für die metallischen Verunreinigungen sind das erste Bild und das zweite Bild in größerem Maße unähnlich als das erste und das zweite Bild der nicht-metallischen Verunreinigungen.

Man berechnet nun mit der Auswerteeinrichtung 16 die quadratische Abweichung zwischen den unter verschiedenen Beleuchtungsbedingungen erfassten ersten und zweiten Bildern und verwendet diese quadratische Abweichung als Maß für die Ähnlichkeit zwischen dem ersten und dem zweiten Bild. Setzt man einen Schwellenwert, so lassen sich die partikelartigen Verunreinigungen in eine erste Klasse (nicht-metallische Verunreinigungen) einordnen, wenn die Ähnlichkeit zwischen dem ersten Bild und dem zweiten Bild unter dem Schwellenwert liegt. Demgegenüber werden die partikelartigen Verunreinigungen in eine zweite Klasse (metallische Verunreinigungen) eingeordnet, wenn die Ähnlichkeit zwischen dem ersten Bild und dem zweiten Bild über dem Schwellenwert liegt

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbaren Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombination wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Oberfläche
- 2: Verunreinigung
- 3: Kamera
- 4, 5, 13, 14: Lichtquelle
- 6: Vorrichtung
- 7: Prüfling
- 8: Beobachtungsrichtung
- 9, 10, 11, 12: Beleuchtungsrichtung
- 15: Steuereinrichtung
- 16: Auswerteeinrichtung

## Patentansprüche

1. Verfahren zum Klassifizieren einer partikelartigen Verunreinigung (2) auf einer Oberfläche (1) eines Prüflings (7) mit den Schritten
Beleuchten der Verunreinigung (2) mit elektromagnetischer Strahlung mit einer bezogen auf die Verunreinigung (2) ersten Beleuchtungsrichtung (9),
Erfassen eines ersten Bildes der von der Strahlung aus der ersten Beleuchtungsrichtung (9) beleuchteten Verunreinigung (2) mit einer bezogen auf die Verunreinigung (2) ersten Beobachtungsrichtung (8),
Beleuchten der Verunreinigung (2) mit elektromagnetischer Strahlung mit einer bezogen auf die Verunreinigung (2) zweiten Beleuchtungsrichtung (10),
Erfassen eines zweiten Bildes der von der Strahlung aus der zweiten Beleuchtungsrichtung (10) beleuchteten Verunreinigung (2) mit einer bezogen auf die Verunreinigung (2) zweiten Beobachtungsrichtung,
wobei
a) entweder die erste Beleuchtungsrichtung (9) und die zweite Beleuchtungsrichtung (10) voneinander verschieden sind und einen von 0° verschiedenen Azimutwinkel einschließen sowie die erste Beobachtungsrichtung (8) und die zweite Beobachtungsrichtung gleich sind oder
b) die erste Beleuchtungsrichtung (9) und die zweite Beleuchtungsrichtung (10) gleich sind sowie die erste Beobachtungsrichtung (8) und die zweite Beobachtungsrichtung voneinander verschieden sind und einen von 0° verschiedenen Azimutwinkel einschließen,
wobei der Azimutwinkel derjenige Winkel ist, den die erste Beleuchtungsrichtung (9) und die zweite Beleuchtungsrichtung (10) oder die erste Beobachtungsrichtung (8) und die zweite Beobachtungsrichtung in einer Projektion auf die Oberfläche (1) einschließen,
Berechnen eines Maßes für eine Ähnlichkeit zwischen dem ersten Bild und dem zweiten Bild,
wobei eine Bildgröße oder ein betrachteter Bildausschnitt des ersten Bilds und des zweiten Bilds so gewählt wird, dass nur genau eine Verunreinigung in den ersten und zweiten Bildern bei der Berechnung des Maßes für die Ähnlichkeit berücksichtigt wird, und
Einordnen der Verunreinigung (2) in mindestens eine erste und eine zweite Klasse anhand des berechneten Maßes für die Ähnlichkeit,
wobei die erste Klasse und die zweite Klasse jeweils eine Art eines Materials der Verunreinigung (2) bezeichnen,
wobei die Verunreinigung (2) die Art des Materials einer der ersten und zweiten Klassen aufweist,
wobei wenn die Ähnlichkeit zwischen dem ersten Bild und dem zweiten Bild über einem vorgegebenen Schwellenwert liegt, die Verunreinigung (2) in die erste Klasse eingeteilt wird und wenn die Ähnlichkeit zwischen dem ersten Bild und dem zweiten Bild unter dem Schwellenwert liegt, die Verunreinigung (2) in die zweite Klasse eingeteilt wird.

2. Verfahren nach dem der vorhergehenden Anspruch, **dadurch gekennzeichnet, dass** die erste Klasse ein Material mit einer ersten Oberflächenrauheit bezeichnet, und die zweite Klasse ein Material mit einer zweiten Oberflächenrauheit bezeichnet, wobei die erste Oberflächenrauheit größer ist als die zweite Oberflächenrauheit.

3. Verfahren nach einem der vorhergehenden Ansprüche, **dadurch gekennzeichnet, dass** entweder der Azimutwinkel zwischen der ersten Beleuchtungsrichtung (9) und der zweiten Beleuchtungsrichtung (10) einen Wert in einem Bereich von 80° bis 110°, vorzugsweise von 90° aufweist oder der Azimutwinkel zwischen der ersten Beobachtungsrichtung (8) und der zweiten Beobachtungsrichtung einen Wert in einem Bereich von 80° bis 110°, vorzugsweise von 90° aufweist.

4. Verfahren nach einem der vorhergehenden Ansprüche, **dadurch gekennzeichnet, dass** das Verfahren weiterhin die Schritte aufweist
Beleuchten der Verunreinigung (2) mit elektromagnetischer Strahlung mit einer dritten Beleuchtungsrichtung (11),
Beleuchten der Verunreinigung (2) mit elektromagnetischer Strahlung mit einer vierten Beleuchtungsrichtung (12),
wobei der Azimutwinkel zwischen der ersten Beleuchtungsrichtung (9) und der dritten Beleuchtungsrichtung (11) einen Wert in einem Bereich von 170° bis 190°, vorzugsweise von 180° aufweist, und
wobei der Azimutwinkel zwischen der zweiten Beleuchtungsrichtung (10) und der vierten Beleuchtungsrichtung (12) einen Wert in einem Bereich von 170° bis 190°, vorzugsweise von 180° aufweist,
wobei das Erfassen des ersten Bildes bei einer gleichzeitigen Beleuchtung der Verunreinigung (2) aus der ersten Beleuchtungsrichtung (9) und der dritten Beleuchtungsrichtung (11) erfolgt und
wobei das Erfassen des zweiten Bildes bei einer gleichzeitigen Beleuchtung der Verunreinigung (2) aus der zweiten Beleuchtungsrichtung (10) und der vierten Beleuchtungsrichtung (12) erfolgt.

5. Verfahren nach einem der vorhergehenden Ansprüche, **dadurch gekennzeichnet, dass** das Verfahren darüber hinaus die Schritte aufweist,
Beleuchten der Verunreinigung (2) mit elektromagnetischer Strahlung mit einer fünften Beleuchtungsrichtung,
Erfassen eines dritten Bildes der von der Strahlung aus der fünften Beleuchtungsrichtung beleuchteten Verunreinigung (2) mit einer dritten Beobachtungsrichtung, wobei entweder die erste Beleuchtungsrichtung (9), die zweite Beleuchtungsrichtung (10) und die fünfte Beleuchtungsrichtung voneinander verschieden sind sowie die erste Beobachtungsrichtung (8), die zweite Beobachtungsrichtung und die dritte Beobachtungsrichtung gleich sind oder die erste Beleuchtungsrichtung (9), die zweite Beleuchtungsrichtung (10) und die fünfte Beleuchtungsrichtung gleich sind sowie die erste Beobachtungsrichtung (8), die zweite Beobachtungsrichtung und die dritte Beobachtungsrichtung voneinander verschieden sind, und
Berechnen eines Maßes für eine Ähnlichkeit zwischen dem ersten Bild, dem zweiten Bild und dem dritten Bild.

6. Verfahren nach einem der vorhergehenden Ansprüche, **dadurch gekennzeichnet, dass** falls das Merkmal a) realisiert ist, die erste und die zweite Beobachtungsrichtung (8) gleich der Normalen auf der Oberfläche (1) ist.

7. Verfahren nach einem der vorhergehenden Ansprüche, **dadurch gekennzeichnet, dass** falls das Merkmal a) realisiert ist, sich die erste und die zweite Beleuchtungsrichtung (9, 10) nur durch einen zwischen diesen gemessenen Azimutwinkel unterscheiden, wobei eine Normale der Oberfläche (1) den Winkelscheitel des Azimutwinkels bildet und der Azimutwinkel in einer Ebene senkrecht zu der Normalen gemessen ist.

8. Verfahren nach einem der vorhergehenden Ansprüche, **dadurch gekennzeichnet, dass** falls das Merkmal b) realisiert ist, sich die erste und die zweite Beobachtungsrichtung (8) nur durch den zwischen diesen gemessenen Azimutwinkel unterschieden.

9. Vorrichtung (6) zum Klassifizieren einer partikelartigen Verunreinigung (2) auf einer Oberfläche (1) eines Prüflings (7), wobei die Vorrichtung (6) aufweist
eine Beleuchtung mit mindestens einer ersten Beleuchtungseinrichtung (4), wobei die Beleuchtung derart eingerichtet und angeordnet ist, dass in einem Betrieb der Vorrichtung (6) mit der Beleuchtung die Verunreinigung (2) mit elektromagnetischer Strahlung mit einer ersten Beleuchtungsrichtung (9) und einer zweiten Beleuchtungsrichtung (10) beleuchtbar ist,
eine Erfassungseinrichtung mit mindestens einer ersten Kamera (3), wobei die Erfassungseinrichtung derart eingerichtet ist, dass mit der Erfassungseinrichtung in dem Betrieb der Vorrichtung (6) ein erstes Bild der von der Strahlung aus der ersten Beleuchtungsrichtung (9) beleuchteten Verunreinigung (2) mit einer ersten Beobachtungsrichtung (8) erfassbar ist und ein zweites Bild der von der Strahlung aus der zweiten Beleuchtungsrichtung (10) beleuchteten Verunreinigung (2) mit einer zweiten Beobachtungsrichtung erfassbar ist,
eine Steuerreinrichtung (15), wobei die Steuereinrichtung (15) derart eingerichtet ist, dass
a) entweder die erste Beleuchtungsrichtung (9) und die zweite Beleuchtungsrichtung (10) voneinander verschieden sind und einen von 0° verschiedenen Azimutwinkel einschließen sowie die erste Beobachtungsrichtung (8) und die zweite Beobachtungsrichtung gleich sind oder
b) oder die erste Beleuchtungsrichtung (9) und die zweite Beleuchtungsrichtung (10) gleich sind und einen von 0° verschiedenen Azimutwinkel einschließen sowie die erste Beobachtungsrichtung (8) und die zweite Beobachtungsrichtung voneinander verschieden sind,
wobei der Azimutwinkel derjenige Winkel ist, den die erste Beleuchtungsrichtung (9) und die zweite Beleuchtungsrichtung (10) oder die erste Beobachtungsrichtung (8) und die zweite Beobachtungsrichtung in einer Projektion auf die Oberfläche (1) einschließen, und eine Auswerteeinrichtung (16),
wobei die Auswerteeinrichtung (16) derart wirksam mit der Erfassungseinrichtung verbunden ist, dass die Auswerteeinrichtung (16) in dem Betrieb der Vorrichtung (6) das erste und das zweite Bild von der Erfassungseinrichtung empfängt, und wobei die Auswerteeinrichtung (16) derart eingerichtet ist, dass die Auswerteeinrichtung (16) ein Maß für eine Ähnlichkeit zwischen dem ersten Bild und dem zweiten Bild berechnet, wobei eine Bildgröße oder ein betrachteter Bildausschnitt des ersten Bilds und des zweiten Bilds so gewählt wird, dass nur genau eine Verunreinigung in den ersten und zweiten Bildern bei der Berechnung des Maßes für die Ähnlichkeit berücksichtigt wird, und
wobei die Auswerteeinrichtung (16) derart eingerichtet ist, dass die Auswerteeinrichtung (16) die Verunreinigung (2) anhand des berechneten Maßes für die Ähnlichkeit in eine aus mindestens einer ersten und einer zweiten Klasse einordnet, wobei die erste Klasse und die zweite Klasse jeweils eine Art eines Materials der Verunreinigung (2) bezeichnen und
wobei wenn die Ähnlichkeit zwischen dem ersten Bild und dem zweiten Bild über einem vorgegebenen Schwellenwert liegt, die Verunreinigung (2) in die erste Klasse eingeteilt wird und wenn die Ähnlichkeit zwischen dem ersten Bild und dem zweiten Bild unter dem Schwellenwert liegt, die Verunreinigung (2) in die zweite Klasse eingeteilt wird.

10. Vorrichtung (6) nach Anspruch 9, **dadurch gekennzeichnet, dass** die Steuerreinrichtung (15) wirksam mit der Beleuchtung verbunden ist, wobei die Beleuchtung eine zweite Beleuchtungseinrichtung aufweist, wobei die Steuereinrichtung (16) derart eingerichtet ist, dass in dem Betrieb der Vorrichtung (6) die Verunreinigung (2) von der ersten Beleuchtungseinrichtung (4) mit elektromagnetischer Strahlung mit der ersten Beleuchtungsrichtung (9) beleuchtbar ist und von der zweiten Beleuchtungseinrichtung (5) mit elektromagnetischer Strahlung mit der zweiten Beleuchtungsrichtung (10) beleuchtbar ist.

11. Vorrichtung (6) nach dem vorhergehenden Anspruch, **dadurch gekennzeichnet, dass** die erste und die zweite Beleuchtungseinrichtung (4, 5) Segmente einer ringförmigen Beleuchtung mit einer Mehrzahl von Segmenten sind.

12. Vorrichtung (6) nach Anspruch 9, **dadurch gekennzeichnet, dass** die Vorrichtung (6) eine Verschwenkeinrichtung aufweist, wobei die Verschwenkeinrichtung derart ausgestaltet ist, dass die Verschwenkeinrichtung in dem Betrieb der Vorrichtung (6) zwischen dem Erfassen des ersten Bildes und dem Erfassen des zweiten Bildes eine relative Verschwenkung zwischen der Oberfläche (1) mit der Verunreinigung (2) einerseits und der Beleuchtung und der Erfassungseinrichtung andererseits ausführt.

13. Vorrichtung (6) nach einem der Ansprüche 9 bis 12, **dadurch gekennzeichnet, dass** Beleuchtung derart angeordnet ist, dass die erste und die zweite Beleuchtungsrichtung (9, 10) einen Streiflichteinfall auf der Oberfläche (1) bewirken.

14. Vorrichtung (6) nach einem der Ansprüche 9 bis 13, **dadurch gekennzeichnet, dass** die Auswerteeinrichtung (16) derart eingerichtet ist, dass die Auswerteeinrichtung (16) in dem Betrieb der Vorrichtung (6) zumindest aus dem ersten oder dem zweiten Bild ein Maß für eine Anzahl von Verunreinigungen (2) auf der Oberfläche (1) berechnet.

## Claims

1. A method for classifying a particulate contamination (2) on a surface (1) of a test specimen (7) comprising the steps of
illuminating the contamination (2) with electromagnetic radiation comprising a first illumination direction (9) relative to the contamination (2),
capturing a first image of the contamination (2) illuminated by the radiation from the first illumination direction (9) under a first observation direction (8) relative to the contamination (2),
illuminating the contamination (2) with electromagnetic radiation comprising a second illumination direction (10) relative to the contamination (2),
capturing a second image of the contamination (2) illuminated by the radiation from the second illumination direction (10) under a second observation direction relative to the contamination (2),
wherein
a) either the first illumination direction (9) and the second illumination direction (10) are different from each other and include an azimuth angle different from 0° and the first observation direction (8) and the second observation direction are the same, or
b) the first illumination direction (9) and the second illumination direction (10) are the same and the first observation direction (8) and the second observation direction are different from each other and include an azimuth angle different from 0°,
wherein the azimuth angle is the angle enclosed by the first illumination direction (9) and the second illumination direction (10) or the first observation direction (8) and the second observation direction in a projection onto the surface (1),
calculating a measure of similarity between the first image and the second image,
wherein an image size or a considered image section of the first image and the second image is selected such that only exactly one contamination in the first and second images is considered in the calculation of the measure of similarity, and
classifying the contamination (2) into at least a first and a second class based on the calculated measure of similarity,
wherein the first class and the second class each denote a type of a material of the contamination (2),
wherein the contamination (2) comprises the type of material of one of the first and second classes,
wherein if the similarity between the first image and the second image is above a predetermined threshold, the contamination (2) is classified in the first class and if the similarity between the first image and the second image is below the threshold, the contamination (2) is classified in the second class.

2. The method according to the preceding claim, **characterised in that** the first class denotes a material comprising a first surface roughness, and the second class denotes a material comprising a second surface roughness, the first surface roughness being larger than the second surface roughness.

3. The method according to any one of the preceding claims, **characterized in that** either the azimuth angle between the first illumination direction (9) and the second illumination direction (10) has a value in a range of 80° to 110°, preferably of 90°, or the azimuth angle between the first observation direction (8) and the second observation direction has a value in a range of 80° to 110°, preferably of 90°.

4. The method according to any one of the preceding claims, **characterized in that** the method further comprises the steps of
illuminating the contamination (2) with electromagnetic radiation with a third illumination direction (11),
illuminating the contamination (2) with electromagnetic radiation with a fourth illumination direction (12),
wherein the azimuth angle between the first illumination direction (9) and the third illumination direction (11) has a value in a range of 170° to 190°, preferably of 180°, and
wherein the azimuth angle between the second illumination direction (10) and the fourth illumination direction (12) has a value in a range of 170° to 190°, preferably of 180°,
wherein the capturing of the first image is carried out with a simultaneous illumination of the contamination (2) from the first illumination direction (9) and the third illumination direction (11), and
wherein the capturing of the second image is carried out with a simultaneous illumination of the contamination (2) from the second illumination direction (10) and the fourth illumination direction (12).

5. The method according to any one of the preceding claims, **characterised in that** the method further comprises the steps of,
illuminating the contamination (2) with electromagnetic radiation with a fifth illumination direction,
capturing a third image of the contamination (2) illuminated by the radiation from the fifth illumination direction with a third observation direction,
wherein either the first illumination direction (9), the second illumination direction (10) and the fifth illumination direction are different from each other and the first observation direction (8), the second observation direction and the third observation direction are the same or the first illumination direction (9), the second illumination direction (10) and the fifth illumination direction are the same and the first observation direction (8), the second observation direction and the third observation direction are different from each other, and
calculating a measure of similarity between the first image, the second image and the third image.

6. The method according to any one of the preceding claims, **characterised in that**, if feature a) is implemented, the first and the second observation direction (8) are equal to the normal to the surface (1).

7. The method according to any one of the preceding claims, **characterized in that** if feature a) is implemented, the first and the second illumination directions (9, 10) differ only by an azimuth angle measured between them, wherein a normal of the surface (1) forms the angular vertex of the azimuth angle and the azimuth angle is measured in a plane perpendicular to the normal.

8. The method according to any one of the preceding claims, **characterised in that** if feature b) is implemented, the first and second observation directions (8) differ only by the azimuth angle measured between them.

9. A device (6) for classifying a particulate contamination (2) on a surface (1) of a test specimen (7), the device (6) comprising
an illumination comprising at least a first illumination device (4), wherein the illumination is arranged and located in such a way that, during an operation of the device (6) with the illumination, the contamination (2) can be illuminated with electromagnetic radiation with a first illumination direction (9) and a second illumination direction (10),
a detection device comprising at least a first camera (3), the detection device being arranged in such a way that a first image of the contamination (2) illuminated by the radiation from the first illumination direction (9) can be captured with a first observation direction (8) by means of the capture device during operation of the device (6) and a second image of the contamination (2) illuminated by the radiation from the second illumination direction (10) can be captured with a second observation direction,
a control means (15), wherein the control means (15) is set up such that
a) either the first illumination direction (9) and the second illumination direction (10) are different from each other and include an azimuth angle different from 0° and the first observation direction (8) and the second observation direction are equal, or
b) the first illumination direction (9) and the second illumination direction (10) are equal and include an azimuth angle different from 0° and the first observation direction (8) and the second observation direction are different from each other,
wherein the azimuth angle is the angle enclosed by the first illumination direction (9) and the second illumination direction (10) or the first observation direction (8) and the second observation direction in a projection onto the surface (1), and
an evaluation means (16),
wherein the evaluation means (16) is operatively connected to the detection device such that the evaluation means (16) receives the first and second images from the detection device during the operation of the device (6), and
wherein the evaluation means (16) is set up in such a way that the evaluation means (16) calculates a measure for a similarity between the first image and the second image, wherein an image size or an observed image section of the first image and of the second image is selected in such a way that only exactly one contamination in the first and second images is taken into account in the calculation of the measure for the similarity, and
wherein the evaluation means (16) is set up in such a way that the evaluation means (16) classifies the contamination (2) into one of at least a first and a second class on the basis of the calculated measure of similarity,
wherein the first class and the second class each denote a type of a material of the contamination (2), and
wherein if the similarity between the first image and the second image is above a predetermined threshold, the contamination (2) is classified in the first class and if the similarity between the first image and the second image is below the threshold, the contamination (2) is classified in the second class.

10. The device (6) according to claim 9, **characterized in that** the control means (15) is operatively connected to the illumination, the illumination comprising a second illumination device, the control means (16) being set up such that, during the operation of the device (6), the contamination (2) is illuminatable by the first illumination device (4) with electromagnetic radiation comprising the first illumination direction (9) and is illuminatable by the second illumination device (5) with electromagnetic radiation comprising the second illumination direction (10).

11. The device (6) according to the preceding claim, **characterised in that** the first and second illumination device (4, 5) are segments of an annular illumination comprising a plurality of segments.

12. The device (6) according to claim 9, **characterized in that** the device (6) comprises a swivelling device, the swivelling device being designed in such a way that the swivelling device carries out a relative swivelling between the surface (1) with the contamination (2) on the one hand and the illumination and the capture device on the other hand during operation of the device (6) between the capturing of the first image and the capturing of the second image.

13. The device (6) according to any one of claims 9 to 12, **characterised in that** illumination is arranged in such a way that the first and second illumination directions (9, 10) cause grazing light to fall onto the surface (1).

14. The device (6) according to any one of claims 9 to 13, **characterised in that** the evaluation means (16) is set up in such a way that, during operation of the device (6), the evaluation means (16) calculates at least from the first or the second image a measure of a number of impurities (2) on the surface (1).

## Revendications

1. Procédé de classification d'une contamination particulaire (2) sur une surface (1) d'un objet à examiner (7) avec les étapes
illuminer la contamination (2) avec un rayonnement électromagnétique dans une première direction d'illumination (9) par rapport à la contamination (2),
saisir une première image de la contamination (2) illuminée avec le rayonnement ayant la première direction d'illumination (9), dans une première direction d'observation (8) par rapport à la contamination (2),
illuminer la contamination (2) avec un rayonnement électromagnétique dans une deuxième direction d'illumination (10) par rapport à la contamination (2),
saisir une deuxième image de la contamination (2) illuminée avec le rayonnement ayant la deuxième direction d'illumination (10), dans une deuxième direction d'observation par rapport à la contamination (2),
a) soit la première direction d'illumination (9) et la deuxième direction d'illumination (10) étant différentes l'une de l'autre et enfermant un angle d'azimut différent de 0°, et la première direction d'observation (8) et la deuxième direction d'observation étant égales, soit
b) la première direction d'illumination (9) et la deuxième direction d'illumination (10) étant égales, et la première direction d'observation (8) et la deuxième direction d'observation étant différentes l'une de l'autre et enfermant un angle d'azimut différent de 0°,
l'angle d'azimut étant l'angle que la première direction d'illumination (9) et la deuxième direction d'illumination (10) ou la première direction d'observation (8) et la deuxième direction d'observation enferment dans une projection sur la surface (1),
calculer une mesure pour la ressemblance entre la première image et la deuxième image,
une taille de l'image ou une partie d'image observée de la première image et de la deuxième image étant choisie de façon que précisément une contamination seulement dans les premières et deuxièmes images soit considérée pour le calcul de la mesure pour la ressemblance, et
classer la contamination (2) en au moins une première et une deuxième classe selon la mesure calculée pour la ressemblance,
la première classe et la deuxième classe désignant chacune un type de matériau de la contamination (2),
la contamination (2) ayant le type de matériau de l'une des première et deuxième classes,
lorsque la ressemblance entre la première image et la deuxième image est au-dessus d'une valeur seuil prédéterminée, la contamination (2) étant classée dans la première classe et lorsque la ressemblance entre la première image et la deuxième image est en-dessous de la valeur seuil, la contamination (2) étant classée dans la deuxième classe.

2. Procédé selon la revendication précédente, **caractérisé en ce que** la première classe désigne un matériau ayant une première rugosité de surface et que la deuxième classe désigne un matériau ayant une deuxième rugosité de surface, la première rugosité de surface étant supérieure à la deuxième rugosité.

3. Procédé selon l'une des revendications précédentes, **caractérisé en ce que** soit l'angle d'azimut entre la première direction d'illumination (9) et la deuxième direction d'illumination (10) a une valeur dans la plage de 80° à 110°, de préférence de 90°, soit l'angle d'azimut entre la première direction d'observation (8) et la deuxième direction d'observation a une valeur dans la plage de 80° à 110°, de préférence de 90°.

4. Procédé selon l'une des revendications précédentes, **caractérisé en ce que** le procédé comprend en outre les étapes
illuminer la contamination (2) avec un rayonnement électromagnétique ayant une troisième direction d'illumination (11),
illuminer la contamination (2) avec un rayonnement électromagnétique ayant une quatrième direction d'illumination (12),
l'angle d'azimut entre la première direction d'illumination (9) et la troisième direction d'illumination (11) ayant une valeur dans la plage de 170° à 190°, de préférence de 180°, et
l'angle d'azimut entre la deuxième direction d'illumination (10) et la quatrième direction d'illumination (12) ayant une valeur dans la plage de 170° à 190°, de préférence de 180°,
la saisie de la première image étant effectuée sous une illumination simultanée de la contamination (2) dans la première direction d'illumination (9) et la troisième direction d'illumination (11) et
la saisie de la deuxième image étant effectuée sous une illumination simultanée de la contamination (2) dans la deuxième direction d'illumination (10) et la quatrième direction d'illumination (12).

5. Procédé selon l'une des revendications précédentes, **caractérisé en ce que** le procédé comprend en outre les étapes
illuminer la contamination (2) avec un rayonnement électromagnétique ayant une cinquième direction d'illumination,
saisir une troisième image de la contamination (2) illuminée par de rayonnement ayant la cinquième direction d'illumination, dans une troisième direction d'observation,
soit la première direction d'illumination (9), la deuxième direction d'illumination (10) et la cinquième direction d'illumination étant différentes les unes des autres et la première direction d'observation (8), la deuxième direction d'observation et la troisième direction d'observation étant égales, soit la première direction d'illumination (9), la deuxième direction d'illumination (10) et la cinquième direction d'illumination étant égales et la première direction d'observation (8), la deuxième direction d'observation et la troisième direction d'observation étant différentes les unes des autres et
calculer une mesure pour la ressemblance entre la première image, la deuxième image et la troisième image.

6. Procédé selon l'une des revendications précédentes, **caractérisé en ce que**, lorsque la caractéristique a) est réalisée, la première et la deuxième directions d'observation sont égales à la normale à la surface (1).

7. Procédé selon l'une des revendications précédentes, **caractérisé en ce que**, lorsque la caractéristique a) est réalisée, la première direction d'observation (9) ne diffère de la deuxième direction d'observation (10) que par un angle d'azimut mesuré entre celles-ci, une normale à la surface (1) formant le sommet d'angle de l'angle d'azimut et l'angle d'azimut étant mesuré dans un plan perpendiculaire à la normale.

8. Procédé selon l'une des revendications précédentes, **caractérisé en ce que**, lorsque la caractéristique b) est réalisée, la première direction d'observation (8) ne diffère de la deuxième direction d'observation que par l'angle d'azimut mesuré entre celles-ci.

9. Dispositif (6) pour la classification d'une contamination particulaire (2) sur une surface (1) d'un objet à examiner (7), le dispositif (6) comprenant
une illumination ayant au moins une première direction d'illumination (4), l'illumination étant agencée et disposée de façon que lors d'un fonctionnement du dispositif (6) avec l'illumination, la contamination (2) puisse être illuminée par un rayonnement électromagnétique dans une première direction d'illumination (9) et une deuxième direction d'illumination (10),
un dispositif de saisie avec au moins une première caméra (3), le dispositif de saisie étant agencé de façon que, lors du fonctionnement du dispositif (6), avec le dispositif de saisie, une première image de la contamination (2) illuminée par le rayonnement dans la première direction d'illumination (9) puisse être prise dans une première direction d'observation (8) et qu'une deuxième image de la contamination (2) illuminée par le rayonnement dans la deuxième direction d'illumination (10) puisse être prise dans une deuxième direction d'observation,
un dispositif de commande (15), le dispositif de commande (15) étant agencé de façon que
a) soit la première direction d'illumination (9) et la deuxième direction d'illumination (10) soient différentes l'une de l'autre et enferment un angle d'azimut différent de 0°, et la première direction d'observation (8) et la deuxième direction d'observation soient égales, soit
b) la première direction d'illumination (9) et la deuxième direction d'illumination (10) soient égales et enferment un angle d'azimut différent de 0°, et la première direction d'observation (8) et la deuxième direction d'observation étant différentes l'une de l'autre,
l'angle d'azimut étant l'angle que la première direction d'illumination (9) et la deuxième direction d'illumination (10) ou la première direction d'observation (8) et la deuxième direction d'observation enferment dans une projection sur la surface (1), et
un dispositif d'analyse (16),
le dispositif d'analyse (16) étant relié fonctionnellement au dispositif de saisie de façon que, lors du fonctionnement du dispositif (6), le dispositif d'analyse (16) reçoive la première et la deuxième image du dispositif de saisie, et
le dispositif d'analyse (16) étant agencé de façon que le dispositif d'analyse (16) calcule une mesure pour une ressemblance entre la première image et la deuxième image, une taille d'image ou une partie d'image regardée de la première image et de la deuxième image étant choisies de façon que précisément une seule contamination sur les premières et deuxièmes images soit prise en compte lors du calcul de la mesure pour la ressemblance, et
le dispositif d'analyse (16) étant agencé de façon que le dispositif d'analyse (16) classe la contamination (2), sur la base de la mesure calculée pour la ressemblance, dans une classe parmi au moins une première classe et une deuxième classe, la première classe et la deuxième classe désignant chacune un type de matériau de la contamination (2) et,
lorsque la ressemblance entre la première image et la deuxième image est au-dessus d'une valeur seuil prédéterminée, la contamination (2) étant attribuée à la première classe et, lorsque la ressemblance entre la première image et la deuxième image est en-dessous de la valeur seuil, la contamination (2) étant attribuée à la deuxième classe.

10. Dispositif (6) selon la revendication 9, **caractérisé en ce que** le dispositif de commande (15) est relié fonctionnellement à l'illumination, l'illumination comprenant un deuxième dispositif d'illumination, le dispositif de commande (15) étant agencé de façon que, lors du fonctionnement du dispositif (6), la contamination (2) puisse être illuminée par le premier dispositif d'illumination (4) avec un rayonnement électromagnétique dans la première direction d'illumination (9) et puisse être illuminée par le deuxième dispositif d'illumination (5) avec un rayonnement électromagnétique dans la deuxième direction d'illumination (10).

11. Dispositif (6) selon la revendication précédente, **caractérisé en ce que** le premier et le deuxième dispositifs d'illumination (4, 5) sont des segments d'une illumination circulaire ayant une pluralité de segments.

12. Dispositif (6) selon la revendication 9, **caractérisé en ce que** le dispositif (6) comprend un dispositif de pivotement, le dispositif de pivotement étant configuré de façon que le dispositif de pivotement, lors du fonctionnement du dispositif (6), effectue, entre la saisie de la première image et la saisie de la deuxième image, un pivotement relatif entre la surface (1) avec la contamination (2), d'une part, et l'illumination et le dispositif de saisie, d'autre part.

13. Dispositif (6) selon l'une des revendications 9 à 12, **caractérisé en ce que** l'illumination est disposée de façon que le premier et le deuxième dispositifs d'illumination (9, 10) déclenchent, sur la surface (1), une lumière incidente qui effleure.

14. Dispositif (6) selon l'une des revendications 9 à 13, **caractérisé en ce que** le dispositif d'analyse (16) est configuré de façon que le dispositif d'analyse (16) calcule, lors du fonctionnement du dispositif (6), au moins à partir de la première ou la deuxième image, une mesure pour une quantité de contaminations (2) sur la surface (1).
